Europäisches Patentamt

European Patent Office

Office européen des brevets

(19)

(11) Publication number: **0 495 101 A1**

# EUROPEAN PATENT APPLICATION
## published in accordance with Art. 158(3) EPC

(12)

(21) Application number: **90910903.5**

(22) Date of filing: **30.07.90**

(86) International application number:
**PCT/JP90/00966**

(87) International publication number:
**WO 92/02651 (20.02.92 92/05)**

(51) Int. Cl.⁵: **C22C 1/05**, C22C 29/02,
C22C 29/04, C22C 29/16,
B23B 27/14, B23D 61/00,
B26B 3/00, B26B 13/00,
B26B 19/00, B26B 21/00,
B26B 23/00

(43) Date of publication of application:
**22.07.92 Bulletin 92/30**

(84) Designated Contracting States:
**DE**

(71) Applicant: **NIPPON CARBIDE KOGYO KABUSHIKI KAISHA**
**3-1, Marunouchi 3-chome Chiyoda-ku Tokyo 100(JP)**

(72) Inventor: **IZUMI, Hiroshi, 1588-8, Tomomichi Uozu-chi**
**Toyama 937(JP)**
Inventor: **KAKUMA, Yukimichi, 1358, Tonomachi**
**Asahi-machi**
**Shimoniikawa-gun Toyama 937(JP)**

(74) Representative: **Myerscough, Philip Boyd J.A.Kemp & Co. 14, South Square Gray's Inn London, WC1R 5EU(GB)**

(54) **HARD ALLOY.**

(57) A titanium-base hard alloy containing titanium, tungsten, molybdenum, vanadium, niobium, tantalum, nickel, cobalt, carbon, and nitrogen as the essential ingredients each in a specified proportion, wherein at least 80 atomic % in total titanium, tungsten, molybdenum, vanadium, niobium, and tantalum are present in the form of carbides, nitrides and/or carbonitrides. This alloy has high hardness and excellent toughness and is suited for use in making various tools, especially cutting tools which are required to have sharp tool angles, such as a twist drill or an end mill.

EP 0 495 101 A1

TECHNICAL FIELD

This invention relates to a novel hard alloy, and more specifically to a hard alloy which has high hardness and excellent toughness, which is based on carbide, nitride and/or carbonitride of titanium, and which can be worked into cutting tools requiring a sharp edge angle in particular, such as drills, end mills, and the like.

A hard alloy based on carbide, nitride and/or carbonitride of titanium (hereinafter abbreviated as a "TiC-based alloy" for simplicity) is, compared to ordinary WC-based hard alloys, light-weight and has high hardness, excellent oxidation resistance and little chemical affinity for other metals; said alloy is used in part of a bit.

Since the TiC-based alloy is, however, poor in toughness and secondary workability to sharp edges with a small edge angle, it has been used in only tools with a relatively large edge angle, such as bits; it is too difficult to be used in drills with a small edge angle or in narrow, small drills in particular. For improving insufficient toughness of the TiC-based alloy, many proposals have been so far made to add carbide(s) or nitride(s) of one or more metals of Mo, W, Nb, Ta, Cr, V, Zr, Hf, etc. [see, for example, Japanese Patent Publication Nos. 9403/1977, 14856/1980, 40098/1980, 32384/1981 and 32386/1981].

Although insufficient toughness is improved to some extent by the hitherto proposed TiC-based alloy, toughness is not satisfactorily high enough, and said alloy can hardly be worked into cutting tools with a sharp edge, e.g., drills as well as into drills of a small edge diameter having high precision. Even if said alloy is worked into such tools, they are, when in use, broken or nicked within a short time; said tools have thus been still insufficient as cutting tools.

The present inventors have made acciduous investigations to develop a TiC-based alloy having high toughness which eliminates the above defects, and as a result, have completed this invention.

DISCLOSURE OF THE INVENTION

Thus, according to this invention, there is provided a hard alloy characterized by comprising elements, Ti, W, Mo, V, Nb, Ta, Ni, Co, C and N as essential ingredients wherein at least 80 atomic % of the total of Ti, W, Mo, V, Nb and Ta are present in the form of carbide, nitride and/or carbonitride; the contents of the respective elements based on the weight of the hard alloy are that Ti is 24 to 45 %, W 4 to 28 %, Mo 2 to 15 %, V 0.1 to 2.5 %, Nb 2 to 20 %, Ta 2 to 20 %, Ni 5.7 to 37.9 % and Co 7.1 to 39.3 %; a (Nb + Ta) total amount is 4 to 23 % and a Ta/Nb weight ratio is within the range of 0.9 to 3.5; a (Ni + Co) total amount is 20 to 45 % and a Ni/Co weight ratio is within the range of 0.4 to 1.8; and a N atom/(C atom + N atom) weight ratio is within the range of 0.30 to 0.60 and an atomic ratio of (total amount of C atom and N atom)/(total amount of the above metallic atoms except Ni and Co) is within the range of 0.8 to 1.0.

BRIEF DESCRIPTION OF DRAWINGS

Figure 1 is a side view of a straight shank drill. In the drawing, H is an angle of twist, and A is a point angle (135°).

Figure 2 is a view of an enlarged surface of an edge portion of the straight shank drill. In the drawing, P is a primary relief angle, S is a secondary relief angle, and (90-P) is an edge angle.

Figure 3 is a side view of a tip portion of a cutter.

Figure 4 is a plan view of an edge portion of the cutter in Figure 3. In the drawing, θ is an edge angle.

EMBODIMENTS OF THE INVENTION

The hard alloy of this invention comprises 10 elements, Ti, W, Mo, V, Nb, Ta, Ni, Co, C and N as essential ingredients. The contents of these elements can be within the ranges tabulated below which are calculated as atoms based on the weight of the final hard alloy, provided the parenthesized are preferable ranges.

EP 0 495 101 A1

| Atomic ingredient | Content (%) |
|---|---|
| Ti | 24-45 (28-40, especially 30-35) |
| W | 4-28 (6-25, especially 10-20) |
| Mo | 2-15 (3-12, especially 5-8) |
| V | 0.1-2.5 (0.2-2.0, especially 0.3-1.0) |
| Nb | 2-20 (3-17, especially 5-15) |
| Ta | 2-20 (3-17, especially 5-15) |
| (Nb + Ta) | 4-23 (7-20, especially 10-17) |
| Na/Nb (weight ratio) | 0.9-3.5 (1.0-2.5, especially 1.2-2.0) |
| Ni | 5.7-37.9 (7.0-30, especially 8.0-20) |
| Co | 7.1-39.3 (8.0-35, especially 9.0-20) |
| (Ni + Co) | 20-45 (20-35, especially 20-30) |
| Ni/Co (weight ratio) | 0.4-1.8 (0.6-1.5, especially 0.8-1.2) |

Of the above constituting elements, a major portion of Ti, W, Mo, V, Nb and Ta, i.e., at least 80 atomic %, preferably at least 85 atomic %, most preferably at least 90 metallic % of the total of these metallic elements is contained in the hard alloy in the form of carbide, nitride and/or carbonitride; it is advisable that Nb is present substantially in the form of carbide, and Ta is present substantially in the form of nitride.

It is important that the amounts of C atom and N atom derived from carbide, nitride and/or carbonitride in the hard alloy of this invention are well-balanced, and the N atom/(C atom + N atom) weight ratio has to be within the range of 0.30 to 0.60. When the weight ratio is deviated from the above range, it becomes hard to obtain the alloy of high toughness intended by this invention. The range of the N atom/(C atom + N atom) weight ratio is thus preferably 0.33 to 0.50, more preferably 0.35 to 0.45. It is therefore important to control the combination of carbides, nitrides and/or carbonitrides of the above metallic elements constituting the hard alloy of this invention such that the N atom/(C atom + N atom) weight ratio is within the above range.

Further, the balance of the total amount of C and N atoms and the total amount of the metallic atoms except Ni and Co are important in the hard alloy of this inveniton. The atomic ratio of (total amount of C atom and N atom)/(total amount of metallic atoms except Ni and Co) is within the range of 0.8 to 1.0, preferably 0.82 to 0.98, more preferably 0.85 to 0.96. When the atomic ratio is deviated from the above range, it is generally hard to obtain an alloy of high toughness.

By the way, the hard alloy of this invention may contain, besides the aforesaid metallic ingredients, small amounts of Cr, Fe, etc. as unavoidable impurities incorporated into the alloy accompanied by the starting material.

The above-mentioned hard alloy of this invention can be prepared by using, as starting materials, carbides, nitrides and/or carbonitrides of metallic ingredients, Ti, W, Mo, V, Nb and Ta and Ni and Co metals in the proportions required in the final alloy product, and subjecting them to blending, grinding, mixing, drying, molding and sintering steps in a manner known per se.

Part of the metallic ingredients, Ti, W, Mo, V, Nb and Ta can be used in the form of simple metals. On that occasion, however, the amounts of the simple metals need not exceed 20 atomic % of the total of these metallic ingredients; it is preferably less than 15 atomic %, more preferably less than 10 atomic %. When there is a possibility of decarbonization or denitrification during the sintering step, it is desirous that the amounts of the metallic ingredients added as simple metals are more decreased or they are not used.

When at least part of Mo among the above metallic ingredients is used in the form of the metallic single unit, a hard alloy having excellent properties can be produced; it is thus desirable.

The starting material especially preferable to produce the hard alloy of this invention is a starting powder mixture comprising elements, Ti, W, Mo, V, Nb, Ta, Ni, Co, C and N as essential ingredients in the above proportions wherein the metallic ingredients, Ti, W, V, Nb and Ta are present substantially in the form of carbide, nitride and/or carbonitride, at least part of Mo is present in the form of a simple metals, the remainder thereof is present in the form of carbide, nitride and/or carbonitride, and Ni and Co are present substantially as simple metals; it is especially convenient that Nb is used substantially in the form of carbide and Ti is used substantially in the form of nitride.

First of all, in the blending step, generally, the above starting material is blended with a binder and a dispersion medium. Examples of the binder are camphor, paraffins, liquid paraffins, high-molecular compounds (e.g., polyvinyl butyral, and polyacrylates). Examples of the dispersion medium are organic solvents such as methyl alcohol, ethyl alcohol, acetone, toluene, xylene and methyl acetate. The amounts of the binder and the dispersion medium are 20 to 70 % by weight, preferably 40 to 60 % by weight based on the

3

starting material, respectively.

The above blend is then ground and mixed. The grinding and mixing can be conducted by a usual grinding and mixing device such as a ball mill, an attriter, a vibrating mill, etc. It is advisable that the particle size of the blended material becomes generally 1.5 microns or less.

The thus obtained uniform dispersion mixture is then dried to remove the dispersion medium. Drying can be carried out in a usual manner with a drier such as a spray dryer, a Henschel mixer, a vacuum drier or the like. It is advisable that drying is conducted until the content of the dispersion medium thereby beocmes about 0.01 % by weight or less. For example, the conditions in case of conducting drying in a vacuum drier are a temperature of 10 to 80°C, preferably 30 to 60°C, a degree of vacuum of $10^{-1}$ to $10^{-8}$ mmHg and a time of 0.1 to 3 hours.

The thus dried dispersion mixture is then molded into an article of a form corresponding to a desired usage by a molding machine. As the molding machine, a pressure molding machine such as a rubber press, a powder press, or the like is mainly used. An extrusion molding machine or an injection molding machine is also available. When the molding is conducted by extrusion molding or injection molding, a plasticizer, a solvent, and the like can also be properly added to increase fluidity of the blend. When the molding is conducted by the pressure molding machine, the molding pressure varies with a blending composition, and the like, but is usually 0.5 to 2.0 t/cm², preferably 1 to 1.5 t/cm². Besides, methods are also applicable which are described in "Hard Alloys and Sintered Hard Materials - Basis and Application -", compiled by H. Suzuki, pp. 309 - 372 (published by Maruzen K.K. February 20, 1986), "Process for Production of Ceramics - Powder Control and Molding -" compiled by Subcommittee of Ceramics Editorial Committee Course, pp. 214-219 (1st Edition, October 1984, published by Corporation: Nippon Ceramics Association), "Process for Production of Ceramics I", written by Y. Soki, pp. 239-241 (1st Edition, October 10, 1978, published by Gihodo Shuppan K.K.), etc.

The thus obtained molded article is sintered in vacuo or in an atmosphere of an inert gas. A degree of vacuum applicable at that time is generally about $10^{-2}$ to $10^{-5}$ mmHg, preferably $10^{-2}$ to $10^{-3}$ mmHg. Examples of the inert gas are argon, helium and nitrogen.

The sintering conditions can vary over a wide range depending on a starting composition, a type of a molded article, molding conditions, and the like. It is, however, advisable that after the organic substance is almost completely removed at a relatively low temprature, the temperature is raised. The sintering temperature is usually about 1,200 to about 1,700°C, especially about 1,300 to about 1,600°C; it is sufficient that the sintering time is about 0.1 to 3 hours, especially 0.5 to 1 hour.

The above sintering gives the intended hard alloy of this invention. The hard alloy can be formed into a final product suited for each usage by cutting, grinding and finishing in a form suited for each usage through a diamond grindstone, or the like.

For example, the hard alloy provided by this invention can be used suitably as a material of a cutter, especially a cutting tool requiring hardness and toughness.

Since a cutting tool made of a TiC-based alloy has, as stated above, excellent cutting properties but poor toughness, it is used in part of a bit only. Moreover, as a method to utilize the cutting properties upon compensating low toughness of the TiC-based alloy, many proposals have been made to coat the TiC-based alloy on a surface of a cutting tool having high toughness (e.g., Japanese Patent Publication No. 51,034/1986, and Japanese Laid-open Patent Application (Kokai) Nos. 162,782/1985, 96,072/1986, 231,175/1986, 247,673/1986, 44,572/1987 and 93,376/1987).

However, a cutter, especially, a cutting tool, made of the TiC-based alloy and having a sharp edge angle has not yet been proposed.

In the present specification, the "cutting tool" includes cutting tools described in "JIS HANDBOOK TOOLS" compiled by Nippon Kikaku Kyokai, published April 12, 1988 (1st Edition, 1st Printing). Concrete examples are bits, drills, milling cutters, reamers, gear cutting tools, broaches, screw working tools, hacksaws, frames thereof, machine cutters, and the like. The bits, the drills and the milling cutters are preferable. The bit is a tool having a cutter at the end of a shank or a body and used in a lathe, a boring machine, a planing machine, a shaper, a slotter, or the like. The types thereof are, depending on the bit structure, a solid tool, a tipped tool, a butt welded tool, a brazed tool, a clamped tool, a throw away tool, a bit tool, a built-up tool, and the like. The hard alloy of this invention is especially preferably worked into, among others, the solid tool, the tipped tool, the clamped tool and the throw away tool.

The drill is a tool having a cutter on the end and a groove for discharging chips in the body and used chiefly to make holes. The types thereof are, depending on the function or the usage, a reamer-type drill, a core drill, a shell drill, a center drill, a square hole drill, a countersink, a target drill, a gun drill, a spade drill, and the like. The hard alloy of this invention can advantageously be used in the reamer-drill, the core drill and the spade drill in particular.

Moreover, the milling cutter is a rotary cutting tool having an edge on the outer peripheral surface, the end surface or the side surface, and chiefly used in a milling machine. The types thereof are, depending on the function or the usage, bore-type milling cutters and shank-type milling cutters. Examples of the bore-type milling cutters are a plain milling cutter, a slab cutter, a side milling cutter, a half side milling cutter, a gang milling cutter, a face milling cutter, a shell end mill, a slotting milling cutter, a screw slotting cutter, a metal slitting saw, a cold circular saw, a segmental circular saw, an angle milling cutter, a single angle milling cutter, an angle milling cutter, an unequal double angle milling cutte, a double angle milling cutter, a form-relieved milling cutter, a concave milling cutter, a convex milling cutter, a corner rounding milling cutter, a double corner rounding milling cutter, an involute milling cutter, a sprocket milling cutter, a spline milling cutter, a serration milling cutter, a thread milling cutter, a formed cutter, and the like. The hard alloy of this invention is preferably used in, among others, the plain milling cutter and the shell end mill. Examples of the shank-type milling cutters are an end mill, a one-flute end mill, a two-flute end mill, a three-flute end mill, a polyflute end mill, a double-end end mill, a tapered end mill, a ball end mill, a tapered ball end mill, a radius end mill, a square end mill, a formed end mill, a high-helix end mill, a roughing and finishing end mill, a roughing end mill, a keyway end mill, a gear cutting end mill, a counterbore, a machine screw counterbore, a countersink, a counterbore for hexagone socket head bolt, a center reamer, a gear chamfering milling cutter, a dovetail milling cutter, a christmas tree formed milling cutter, a T-slot cutter, a woodruff key-seat milling cutter, a hollow mill, and the like. The hard alloy of this invention exhibit an excellent function especially when used as a constituting material of the end mill, the one-flute end mill, the two-flute end mill, the three-flute end mill, the polyflute end mill, the ball end mill, the square end mill and the high-helix end mill.

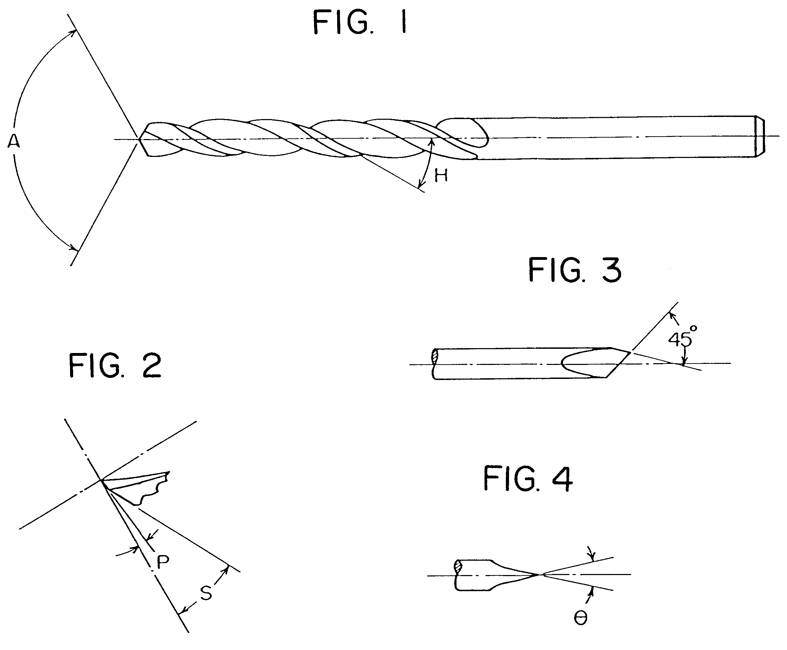

Since the hard alloy of this invention has, as stated above, both high hardness and excellent toughness, there are excellent characteristics that it can easily be worked into a cutting tool having a sharp edge angle of 40 to 170°, preferably 45 to 90°, more preferably 50 to 70°. The "edge angle" here referred to relative to the cutting tool is an angle of an edge given by a rake surface and a relief surface [e.g., in the drill shown in Figure 2 attached, 90° - P° (primary relief angle) is an edge angle].

The cutting tools obtained by using the hard alloy of this invention, e.g., the drills and the end mills, have been found to be not only suited for working of metals having high hardness but also markedly effective for working of relatively soft metals such as aluminum and copper. This tendency is especially conspicuous when the tool is used as a tool of a working machine with a high speed of 30,000 to 80,000 rotations/minute which has been recently developed.

The hard alloy of this invention can also be worked into a cutter other than the cutting tools. The cutter other than the cutting tools include cutters other than the cutting tools, described in "Blue Books, Dictionary of Cutter Information, Illustration: All Cutters" written by H. Hashimoto, August 20, 1986, 1st Printing, published by K.K. Kodansha. Concrete Examples thereof include cutters of a planer group, a kitchen knife group, a saw group, a scissors group, a file group, cutters to cut a soil, and the like. The cutter of the planer group is a cutter having a function to cut straight. Examples thereof are a planer, an ax, a chisel, a hatchet, a razor, a graver, a pencil sharpener, and the like. The hard alloy of this invention can be used preferably in the razor and the pencil sharpener, more preferably in the razor. The cutter of the kitchen knife group is a cutter having a function to cut with pulling and pushing. Examples thereof are a kitchen knife, a rotary kitchen knife, a knife, a sickle, a cutter, and the like. The hard alloy of this invention can advantageously be used in the kitchen knife, the knife and the cutter. The cutter of the saw group is a cutter having a function to cut with many arranged teeth. Examples thereof are a saw, a circular saw, a saw knife, a chain saw, and the like. The saw knife is preferable. The cutter of the scissors group is a cutter having a function to cut between edges. The hard alloy of this invention is suitable as a material of at least an edge portion of, for example, scissors, hair clippers, a lawn mower, a shearing machine, a punch, cutting pliers, a nail clipper, a wire cutter, and the like of which the scissors, the lazor and the cutting priers are preferable. The cutter of the file group is a cutter with rigid edges arrayed in order. Concretely, the hard alloy of this invention can advantageously be utilized in a file, a grater, a nail file, an earthenware mortar, a surface former, a knife sharpener, a scouring rush-like cutter, and the like of which the file and the knife sharpener are preferable. The cutter of the grindstone group is a cutter made of hard particles. The hard alloy of this invention can be applied to, for example, a paper file, a grinder, a fiber cleaner, a metallic brush, and the like of which the grinder is preferable. The cutter to cut a soil is a cutter having a function to cut a soil, a sand and a rock and used for agriculture, horticulture, civil engineering and mining. Examples thereof are cutters of a hoe, a shovel, a pick and a bulldozer, a rock drill, and the like. The hard alloy of this invention exhibits excellent ability to the rock drill in particular.

The hard alloy of this invention has unique characteristics that owing to high hardness and high toughness, it can also be worked into cutters other than the aforesaid cutting tools, and these characteristics

EP 0 495 101 A1

have not been found in the ordinary hard alloys. Thus, when the hard alloy of this invention is used, it can be worked into cutters other than the cutting tools, said cutters having a sharp edge angle of 10 to 40°, preferably 12 to 35°, more preferably 15 to 30°. The "edge angle" here referred to about the cutters other than the cutting tools means an angle of an edge given by a rake face and a relief surface; concretely, it is, for example, an angle indicated by $\theta$ in a cutter shown in Figure 4.

As has been stated above, the hard alloy of this invention can be worked into a cutter having a sharp edge, and the cutter using the hard alloy of this invention has various excellent advantages that the edge is less broken, wear of the edge is little, and the cutter is scarcely deposited with metal when in use.

EXAMPLES

This invention is illustrated more specifically by the following Examples.

EXAMPLES 1-21 and COMPARATIVE EXAMPLES 1-9

A. <u>Production of a hard alloy</u>

As starting powders, a sintered body of TiC and TiN (TiC/TiN:50/50, hereinafter referred to as "TiCN") having an average particle size of 1 micron, a WC powder having an average particle size of 2 microns, an $MO_2$ and Mo powder having an average particle size of 2 microns, a VC powder having an average particle size of 2 to 3 microns, an NbC and NbN powder having an average particle size of 2 to 3 microns, a TaC and TaN powder having an average particle size of 1 to 2 microns, an Ni powder having an average particle size of 4 microns and a Co powder having an average particle size of 2 microns were blended as shown in Table 1. To these powders were further added 50 % by weight of ethyl alcohol, 2 % by weight of polyvinyl butyral and 1 % by weight of dioctyl phthalate (DOP) as a plastisizer. They were ground with a stainless steel ball mill for 48 hours and mixed, provided in only TiCN of hard alloy No. 20 (Example 20) in Table 1, TiC/TiN was 70/30.

Then, the mixture obtained by vacuum drying was press-molded with a rubber press at a pressure of 1 ton/cm$^2$. The binder was removed from the molded article at 300 to 500°C for 1 hour with a degree of vacuum of $10^{-2}$mmHg, and the product was further burned at 1,360 to 1,500°C for 1 hour with a degree of vacuum of $10^{-3}$mmHg to produce a rod-like hard alloy (6 Ø mm x 300 mm).

B. <u>Evaluation of a hard alloy</u>

Toughness and hardness of the obtained alloy are shown in Table 2. Methods of measuring properties are as follows.

(1) Measurement of toughness

Three-point bending strength was measured according to JIS B-4104.

(2) Measurement of hardness

Hardness was measured with a Shimadzu fine hardness meter No. 36739 manufactured by Shimadzu Seisakusho.

As is clear from Table 2, the hard alloy of this invention is quite high in toughness though having high hardness.

6

EP 0 495 101 A1

Table 1 (I)

| | Hard alloy No. | Ingredients | | | | | | | | | | | |
|---|---|---|---|---|---|---|---|---|---|---|---|---|---|
| | | Tic | TiCN | WC | TaC | TaN | NbC | NbN | Mo | $MO_2O$ | Ni | Co | VC |
| Example 1 | 1 | 7.4 | 36 | 14 | 6 | 0 | 6 | 0 | 3 | 2 | 10 | 14 | 1.6 |
| Example 2 | 2 | 7 | 38 | 15 | 8 | 0 | 5 | 0 | 6 | 0 | 12 | 8 | 1 |
| Example 3 | 3 | 5 | 44 | 10 | 7 | 0 | 4 | 0 | 3 | 2 | 14 | 10 | 1 |
| Example 4 | 4 | 0 | 37 | 22 | 7 | 0 | 4 | 0 | 3 | 2 | 14 | 10 | 1 |
| Example 5 | 5 | 0 | 35 | 28 | 7 | 0 | 4 | 0 | 3 | 2 | 10 | 10 | 1 |
| Example 6 | 6 | 7 | 38 | 15 | 8 | 0 | 5 | 0 | 6 | 0 | 8 | 12 | 1 |
| Example 7 | 7 | 6 | 35 | 15 | 8 | 0 | 5 | 0 | 10 | 0 | 12 | 8 | 1 |
| Example 8 | 8 | 0 | 35 | 15 | 6 | 0 | 7 | 0 | 13 | 0 | 14 | 9 | 1 |
| Example 9 | 9 | 7 | 41 | 15 | 8 | 0 | 5 | 0 | 3 | 0 | 12 | 8 | 1 |
| Example 10 | 10 | 2.4 | 33 | 18 | 9 | 0 | 8 | 0 | 3 | 2 | 14 | 10 | 0.6 |
| Example 11 | 11 | 0 | 34.5 | 18 | 9 | 0 | 8 | 0 | 3 | 2 | 14 | 10 | 1.5 |

## Table 1 (I)

| | Sintered ingredients | | | | | | | | | |
|---|---|---|---|---|---|---|---|---|---|---|
| | Tic | W | Mo | V | Nb | Ta | (Nb+Ta) | $\dfrac{Ta}{Nb}$ | $\dfrac{N}{(C+N)}$ | (Ni+CO) |
| Example 1 | 34.2 | 13.2 | 4.9 | 1.3 | 5.3 | 5.5 | 10.8 | 1.0 | 0.35 | 24 |
| Example 2 | 35.4 | 14.1 | 6 | 0.8 | 4.4 | 7.5 | 11.9 | 1.7 | 0.38 | 20 |
| Example 3 | 38.6 | 9.4 | 4.9 | 0.8 | 3.5 | 6.6 | 10.1 | 1.9 | 0.41 | 24 |
| Example 4 | 29.0 | 20.7 | 4.9 | 0.8 | 3.5 | 6.6 | 10.1 | 1.9 | 0.41 | 24 |
| Example 5 | 27.5 | 26.3 | 4.9 | 0.8 | 3.5 | 6.6 | 10.1 | 1.9 | 0.39 | 20 |
| Example 6 | 35.4 | 14.1 | 6.0 | 0.8 | 4.5 | 7.5 | 11.9 | 1.67 | 0.38 | 20 |
| Example 7 | 32.3 | 14.1 | 10 | 0.8 | 4.5 | 7.5 | 11.9 | 1.67 | 0.37 | 20 |
| Example 8 | 27.5 | 14.1 | 13 | 0.8 | 6.2 | 5.6 | 11.8 | 0.9 | 0.41 | 23 |
| Example 9 | 37.9 | 14.1 | 3.0 | 0.8 | 4.4 | 7.5 | 12 | 1.7 | 0.37 | 20 |
| Example 10 | 28.1 | 16.9 | 4.9 | 0.5 | 7.1 | 8.4 | 15.5 | 1.18 | 0.37 | 24 |
| Example 11 | 27.1 | 16.9 | 4.9 | 1.2 | 7.1 | 8.4 | 15.5 | 1.18 | 0.38 | 24 |

EP 0 495 101 A1

Table 1 (II)

| | Hard alloy No. | Ingredients | | | | | | | | | | | |
|---|---|---|---|---|---|---|---|---|---|---|---|---|---|
| | | Tic | TiCN | WC | TaC | TaN | NbC | NbN | Mo | $MO_2O$ | Ni | Co | VC |
| Example 12 | 12 | 0 | 33.5 | 18 | 9 | 0 | 8 | 0 | 3 | 2 | 14 | 10 | 2.5 |
| Example 13 | 13 | 0 | 36.5 | 14 | 10.5 | 0 | 8 | 0 | 4 | 3 | 13 | 10 | 1 |
| Example 14 | 14 | 0 | 32.2 | 14 | 14.9 | 0 | 7.9 | 0 | 4 | 3 | 13 | 10 | 1 |
| Example 15 | 15 | 0 | 34 | 14 | 15 | 0 | 6 | 0 | 4 | 3 | 13 | 10 | 1 |
| Example 16 | 16 | 2.8 | 40 | 14 | 0 | 9 | 7 | 0 | 3 | 2 | 11 | 10 | 1.2 |
| Example 17 | 17 | 2.8 | 40 | 14 | 9 | 0 | 7 | 0 | 3 | 2 | 11 | 10 | 1.2 |
| Example 18 | 18 | 0 | 37 | 10 | 7 | 0 | 5 | 0 | 3 | 2 | 15 | 20 | 1 |
| Example 19 | 19 | 0 | 37 | 10 | 7 | 0 | 5 | 0 | 3 | 2 | 24 | 14 | 1 |
| Example 20 | 20 | 0 | 40.4 | 14 | 0 | 12 | 5 | 0 | 3 | 2 | 10 | 12 | 1.6 |
| Example 21 | 21 | 2.8 | 40 | 14 | 9 | 0 | 0 | 7 | 3 | 2 | 11 | 10 | 1.2 |

Table 1 (II)

| | Sintered ingredients | | | | | | | | | |
|---|---|---|---|---|---|---|---|---|---|---|
| | Tic | W | Mo | V | Nb | Ta | (Nb+Ta) | $\frac{Ta}{Nb}$ | $\frac{N}{(C+N)}$ | (Ni+CO) |
| Example 12 | 26.3 | 16.9 | 4.9 | 2.0 | 7.1 | 8.4 | 15.5 | 2.18 | 0.37 | 24 |
| Example 13 | 28.7 | 13.2 | 6.8 | 0.8 | 7.1 | 9.9 | 17 | 1.4 | 0.4 | 23 |
| Example 14 | 25.3 | 13.2 | 6.8 | 0.8 | 7.0 | 14.0 | 21 | 2.1 | 0.37 | 23 |
| Example 15 | 26.7 | 13.1 | 6.8 | 0.8 | 5.3 | 14.1 | 19.4 | 3.2 | 0.36 | 23 |
| Example 16 | 33.7 | 13.1 | 4.9 | 1.0 | 6.2 | 8.4 | 14.6 | 1.4 | 0.44 | 21 |
| Example 17 | 33.7 | 13.1 | 4.9 | 1.0 | 6.2 | 8.4 | 14.6 | 1.4 | 0.38 | 21 |
| Example 18 | 29.1 | 9.4 | 4.9 | 0.8 | 4.4 | 6.6 | 11 | 1.5 | 0.42 | 35 |
| Example 19 | 29.1 | 9.4 | 4.9 | 0.8 | 4.4 | 6.6 | 11 | 1.5 | 0.42 | 38 |
| Example 20 | 32.0 | 13.2 | 4.9 | 1.3 | 4.4 | 11.1 | 15.5 | 2.5 | 0.31 | 22 |
| Example 21 | 33.7 | 13.1 | 4.9 | 1.0 | 6.1 | 8.4 | 14.5 | 14.5 | 0.46 | 21 |

EP 0 495 101 A1

Table 1 (III)

| | Hard alloy No. | Ingredients | | | | | | | | | | | |
|---|---|---|---|---|---|---|---|---|---|---|---|---|---|
| | | Tic | TiCN | WC | TaC | TaN | NbC | NbN | Mo | $MO_2O$ | Ni | Co | VC |
| Comparative Example 1 | 22 | 18 | 40 | 3.2 | 6 | 0 | 6 | 0 | 3 | 2 | 12 | 9 | 0.8 |
| Example 2 | 23 | 0 | 29.2 | 32 | 6 | 0 | 6 | 0 | 3 | 2 | 12 | 9 | 0.8 |
| Example 3 | 24 | 10 | 50 | 7 | 5 | 0 | 5 | 0 | 2 | 0 | 10 | 10 | 1 |
| Example 4 | 25 | 9 | 38 | 15 | 8 | 0 | 5 | 0 | 1 | 0 | 14 | 9 | 1 |
| Example 5 | 26 | 6 | 30 | 18 | 9 | 0 | 8 | 0 | 3 | 2 | 14 | 10 | 0 |
| Example 6 | 27 | 0 | 32 | 18 | 9 | 0 | 8 | 0 | 3 | 2 | 14 | 10 | 4 |
| Example 7 | 28 | 7 | 44 | 10 | 1.1 | 0 | 1.1 | 0 | 8 | 0 | 13 | 15 | 0.8 |
| Example 8 | 29 | 0 | 34 | 7 | 22.6 | 0 | 5.6 | 0 | 4 | 0 | 11 | 15 | 0.8 |
| Example 9 | 30 | 0 | 33.1 | 7 | 5.4 | 0 | 23.7 | 0 | 4 | 0 | 11 | 15 | 0.8 |

EP 0 495 101 A1

## Table 1 (III)

| | Sintered ingredients | | | | | | | | | |
|---|---|---|---|---|---|---|---|---|---|---|
| | Tic | W | Mo | V | Nb | Ta | (Nb+Ta) | $\frac{Ta}{Nb}$ | $\frac{N}{(C+N)}$ | (Ni+CO) |
| Comparative Example 1 | 45.9 | 3 | 4.9 | 0.7 | 5.3 | 5.5 | 10.8 | 1.0 | 0.33 | 21 |
| Example 2 | 23.0 | 30.1 | 4.9 | 0.7 | 5.3 | 5.5 | 10.8 | 1.0 | 0.34 | 21 |
| Example 3 | 47.3 | 6.6 | 2 | 0.8 | 4.4 | 4.7 | 9.1 | 1.07 | 0.4 | 20 |
| Example 4 | 37 | 14.1 | 1 | 0.8 | 4.4 | 7.5 | 11.9 | 1.7 | 0.36 | 23 |
| Example 5 | 28.4 | 16.9 | 4.9 | 0 | 7.1 | 8.5 | 15.6 | 1.2 | 0.33 | 24 |
| Example 6 | 25.1 | 16.9 | 4.9 | 3.2 | 7.1 | 8.5 | 15.6 | 1.2 | 0.35 | 24 |
| Example 7 | 40.1 | 9.4 | 8 | 0.6 | 0.9 | 0.9 | 1.8 | 1.0 | 0.42 | 28 |
| Example 8 | 26.7 | 6.6 | 4 | 0.6 | 5 | 21.2 | 26.2 | 4.24 | 0.39 | 26 |
| Example 9 | 26.0 | 6.6 | 4 | 0.6 | 21 | 5.1 | 26.1 | 0.24 | 0.36 | 26 |

Table 2 (I)

| | Toughness (Kg/mm²) | Hardness (HV) (Kg/mm²) | | Toughness (Kg/mm²) | Hardness (HV) (Kg/mm²) |
|---|---|---|---|---|---|
| Example-1 | 300 | 1700 | Example-13 | 290 | 1700 |
| Example-2 | 290 | 1680 | Example-14 | 270 | 1650 |
| Example-3 | 265 | 1750 | Example-15 | 260 | 1650 |
| Example-4 | 380 | 1740 | Example-16 | 300 | 1750 |
| Example-5 | 200 | 1700 | Example-17 | 270 | 1700 |
| Example-6 | 290 | 1700 | Example-18 | 270 | 1450 |
| Example-7 | 285 | 1600 | Example-19 | 270 | 1400 |
| Example-8 | 270 | 1500 | Example-20 | 280 | 1700 |
| Example-9 | 250 | 1700 | Example-21 | 240 | 1600 |
| Example-10 | 280 | 1680 | | | |
| Example-11 | 260 | 1600 | | | |
| Example-12 | 240 | 1550 | | | |

## Table 2 (II)

| | Toughness $(Kg/mm^2)$ | Hardness (HV) $(Kg/mm^2)$ |
|---|---|---|
| Comparative Example-1 | 120 | 1650 |
| Example-2 | 145 | 1500 |
| Example-3 | 140 | 1640 |
| Example-4 | 140 | 1600 |
| Example-5 | 140 | 1400 |
| Example-6 | 140 | 1500 |
| Example-7 | 135 | 1430 |
| Example-8 | 165 | 1200 |
| Example-9 | 130 | 1500 |

EXAMPLES 22 to 63 and COMPARATIVE EXAMPLES 10 to 27

(Manufacture of a cutting tool and a cutter and evaluation thereof)

(C-1) Straight shank drill

Each of the hard alloys obtained in said Examples and Comparative Examples was ground into a circular cylinder (5 Ø mm x 60 mm) with a diamond grinding machine and further worked into a straight shank drill A or B as shown in Table 3 (for details, see Figures 1 and 2). The conditions of the edges of the obtained drills were observed, and the results are shown in Table 4.

## Table 3

(unit: degree)

| | Edge Angle | Angle of twist | Primary relief angle | Secondary relief angle |
|---|---|---|---|---|
| Straight shank drill-A | 74 | 15 | 16 | 35 |
| Straight shank drill-B | 65 | 45 | 25 | 35 |

As metals being cut, copper and SUS-304 were selected, and a perforation test with a drill was run under the cutting conditions shown in Table 5. The results are also shown in Table 4.
Evaluation of the test is based on grades shown in Table 6.

14

Table 4 (I)

| | Hard alloy No. | Drill-A | | | | | Drill-B | | | | |
|---|---|---|---|---|---|---|---|---|---|---|---|
| | | Condition of a drill in manufacturing a drill | Results of cutting | | | | Condition of a drill in manufacturing a drill | Results of cutting | | | |
| | | | Copper | | SUS-304 | | | Copper | | SUS-304 | |
| | | | Condition of an edge | Deposition | Condition of an edge | Deposition | | Condition of an edge | Deposition | Condition of an edge | Deposition |
| Ex-22 | 1 | ⊚ | ⊚ | ⊚ | ⊚ | ⊚ | ⊚ | ⊚ | ⊚ | ⊚ | ⊚ |
| -23 | 2 | | | | | | | | | | |
| -24 | 3 | | | | | | | | | | |
| -25 | 4 | | | ↓ | ↓ | | | | ↓ | ↓ | |
| -26 | 5 | | | ○ | ○ | | | | ○ | ○ | |
| -27 | 6 | | ↓ | ⊙ | ⊙ | | | | ⊙ | ⊙ | |
| -28 | 7 | | ↓ | | ↓ | ↓ | | ↓ | | ↓ | |
| -29 | 8 | | ○ | | ○ | ↓ | | ○ | | ○ | ↓ |
| -30 | 9 | | ○ | | ○ | ○ | | ○ | ↓ | ○ | ○ |
| -31 | 10 | | ⊙ | | ⊙ | ⊙ | | ⊙ | ⊙ | ⊙ | ⊙ |
| -32 | 11 | | | | ↓ | | | ↓ | | ↓ | |
| -33 | 12 | | | | ○ | | | ○ | | ○ | |
| -34 | 13 | | | | ⊙ | | | ⊙ | | ⊙ | |
| -35 | 14 | | | | | | | | | ↓ | |
| -36 | 15 | | | | | | | | | ○ | |
| -37 | 16 | | | | | | | | | ⊙ | |
| -38 | 17 | | | | | | | | | | |
| -39 | 18 | | ↓ | | ↓ | | | ↓ | | ↓ | ↓ |
| -40 | 19 | | ○ | | ○ | | | ○ | | ○ | ○ |
| -41 | 20 | | ⊙ | | ⊙ | | | ⊙ | | ⊙ | ⊙ |
| -42 | 21 | ↓ | ○ | ↓ | ○ | ↓ | ↓ | ○ | ↓ | ○ | ↓ |

Ex : Example

Table 4 (II)

| | Hard alloy No. | Drill-A | | | | | Drill-B | | | | |
|---|---|---|---|---|---|---|---|---|---|---|---|
| | | Condition of a drill in manufactur-ing a drill | Results of cutting | | | | Condition of a drill in manufactur-ing a drill | Results of cutting | | | |
| | | | Copper | | SUS-304 | | | Copper | | SUS-304 | |
| | | | Condition of an edge | Deposi-tion | Condition of an edge | Deposi-tion | | Condition of an edge | Deposi-tion | Condition of an edge | Deposi-tion |
| C.Ex -10 | 22 | X | X | X | X | X | X | X | X | X | X |
| -11 | 23 | ↓ | ◯ | ↓ | ↑ | ↓ | ↑ | ↓ | ◯ | ↓ | ↓ |
| -12 | 24 | | X | | | | | | X | | |
| -13 | 25 | ↓ | | ↓ | | ↓ | | | ◯ | | |
| -14 | 26 | ◯ | | ◯ | | ◯ | | | X | | |
| -15 | 27 | X | | X | | X | | | ↓ | | |
| -16 | 28 | ↓ | | ↓ | | ↓ | ↓ | | | | |
| -17 | 29 | | | ↓ | | | ◯ | | ↓ | | |
| -18 | 30 | ↓ | ↓ | ◯ | ↓ | ↓ | ↓ | ↓ | ◯ | ↓ | ↓ |

C.Ex : Comparative Example

EP 0 495 101 A1

Table 5

| Cutting con- ditions<br>Metal being cut | Cutting speed<br>(m/min) | Feed amount<br>(mm/rev.) | Cutting depth<br>(mm) | Cutting times<br>(times/ piece) |
|---|---|---|---|---|
| Copper | 100 | 0.12 | 15 | 1,000 |
| SUS-304 | 30 | 0.10 | 15 | 1,000 |

Table 6

| Evaluation symbol<br>Evaluation item | ⊙ | ○ | X |
|---|---|---|---|
| Condition of an edge in manufacturing a drill | No breakage is observed at all. | Breakage is slightly observed. | Breakage is notably observed |
| Condition of an edge after cutting test | -ditto- | -ditto- | -ditto- |
| Deposition of an edge after cutting test | Deposition is not observed. | Deposition is slightly observed. | Deposition is notably observed. |

As is clear from Table 4, the drill worked from the hard metal of this invention can sharply be manufactured with no breakage of the edge even at the edge angles of 74° and 65°.

By contrast, the drill worked from the Ti-based alloy of the composition other than in this invention causes breakage of the edge, and thus cannot actually be used. Even in the drill with no breakage observed, breakage of the edge is notably observed or deposition with the metal being cut heavily occurs in the cutting test; thus the drill cannot actually be used.

On the contrary, in the drill using the hard alloy of this invention, breakage of the edge and deposition with the metal being cut are not observed at all even after the cutting test. From this fact, it becomes apparent that the drill made of the hard alloy of this invention is a quite excellent cutting tool.

This is also the same with the end mill. It is found that the end mill made of the hard alloy of this invention allows no breakage of the edge and almost no deposition with the metal being cut, and is thus an excellent cutting tool.

(C-2) Cutter

The hard alloy produced in each of said Examples and Comparative Examples was worked into a cutter with an edge angle of 16° (hereinafter referred to as a "cutter A") or a cutter with an edge angle of 24° (hereinafter referred to as a "cutter B") though a diamond grindstone (for details, see Figures 3 and 4).

A 150-micron thick polyvinyl chloride film containing 8 % of calcium carbonate and 5 % of titanium oxide was selected as a material being cut, and subjected to a cutting test by the above cutter at a line speed of 5 m/min over 6,000 m.

After the cutting test, a wear degree of the edge of the cutter and a breakage condition of the edge

17

EP 0 495 101 A1

were measured, and the results are shown in Table 7. The evaluation items and grades are shown in Table 8.

## Table 7 (I)

| | Hard alloy No. | Cutter-A | | | Cutter-B | | |
|---|---|---|---|---|---|---|---|
| | | Condition of an edge in manufacturing a cutter | After a cutting test | | Condition of an edge in manufacturing a cutter | After a cutting test | |
| | | | Condition of an edge | Degree of wear | | Condition of an edge | Degree of wear |
| Example-43 | 1 | ◎ | ◎ | ◎ | ◎ | ◎ | ◎ |
| -44 | 2 | | | | | | |
| -45 | 3 | | | | | ↓ | ↓ |
| -46 | 4 | | ↓ | ↓ | | ○ | ○ |
| -47 | 5 | | ○ | ○ | | ◎ | ◎ |
| -48 | 6 | | ◎ | ◎ | | | |
| -49 | 7 | | ↓ | ↓ | | ↓ | ↓ |
| -50 | 8 | | ○ | ○ | | ○ | ○ |
| -51 | 9 | | ○ | ○ | | ◎ | ◎ |
| -52 | 10 | | ◎ | ◎ | | | |
| -53 | 11 | | ↓ | | | | |
| -54 | 12 | | ○ | | | | |
| -55 | 13 | | ◎ | | | | |
| -56 | 14 | | | | | | |
| -57 | 15 | | | | | | |
| -58 | 16 | | | | | | |
| -59 | 17 | | ↓ | ↓ | | ↓ | ↓ |
| -60 | 18 | | ○ | ○ | | ○ | ○ |
| -61 | 19 | | ◎ | ◎ | | ◎ | ◎ |
| -62 | 20 | | ○ | ○ | | ○ | ○ |
| -63 | 21 | ↓ | ○ | ○ | ↓ | ○ | ○ |

18

## Table 7 (II)

| | Hard alloy No. | Cutter-A | | | Cutter-B | | |
|---|---|---|---|---|---|---|---|
| | | Condition of an edge in manufacturing a cutter | After a cutting test | | Condition of an edge in manufacturing a cutter | After a cutting test | |
| | | | Condition of an edge | Degree of wear | | Condition of an edge | Degree of wear |
| Comparative Example-19 | 22 | X | X | X | X | X | X |
| -20 | 23 | ↓ | ↓ | ↓ | ◯ | ↓ | ↓ |
| -21 | 24 | | | | X | | |
| -22 | 25 | | | | ↓ | | |
| -23 | 26 | | | | ◯ | | |
| -24 | 27 | | | | X | | |
| -25 | 28 | | | ↓ | ↓ | | ↓ |
| -26 | 29 | | | ◯ | ◯ | | ◯ |
| -27 | 30 | ↓ | ↓ | ↓ | X | ↓ | X |

EP 0 495 101 A1

## Table 8

| Evaluation symbol / Evaluation item | ⊙ | ◯ | X |
|---|---|---|---|
| Condition of an edge in manufacturing a cutter | No breakage is observed at all. | Breakage is slightly observed. | Breakage is notably observed |
| Condition of an edge after cutting test | -ditto- | -ditto- | -ditto- |
| Wear degree of an edge | less than 2/100 mm | 2/100- 5/100 mm | 6/100 mm or more |

As is apparent from Table 7, the cutter made of the hard alloy of this invention could sharply be finished at both the edge angles of 16° and 24°, but almost all of the cutters in Comparative Examples which were worked from the alloy of the composition other than that of this invention caused heavy breakage of the edge and could not have a sharp edge.

Among the cutters in Comparative Examples, even those finished sharply caused breakage or wear of the edge when subjected to the cutting test, and none could actually be used.

By contrast, in the cutters according to this invention, after the cutting test, breakage of the edge was not observed at all, and wear of the edge was very low; the cutter was thus found to be a very useful cutter in practice.

Moreover, regarding the razor, the razor using the hard alloy of this invention was found to cause no breakage of the edge and little wear of the edge.

INDUSTRIAL UTILIZABILITY

As has been described above, the hard alloy provided by this invention has high hardness and excellent toughness, and can be suitably used as a material of a cutter, especially, a cutting tool requiring hardness and/or toughness.

**Claims**

1. A hard alloy comprising elements, Ti, W, Mo, V, Nb, Ta, Ni, Co, C and N as essential ingredients wherein at least 80 atomic % of the total of Ti, W, Mo, V, Nb and Ta is present in the form of carbide, nitride and/or carbonitride; the contents of the respective elements based on the weight of the hard alloy are that Ti is 24 to 45 %, W 4 to 28 %, Mo 2 to 15 %, V 0.1 to 2.5 %, Nb 2 to 20 %, Ta 2 to 20 %, Ni 5.7 to 37.9 % and Co 7.1 to 39.3 %; a (Nb + Ta) total amount is 4 to 23 % and a Ta/Nb weight ratio is within the range of 0.9 to 3.5; a (Ni + Co) total amount is 20 to 45 % and an Ni/Co weight ratio is within the range of 0.4 to 1.8; and an N atom/(C atom + N atom) weight ratio is within the range of 0.30 to 0.60 and an atomic ratio of (total amount of C atom and N atom)/(total amount of the above metallic atoms except Ni and Co) is within the range of 0.8 to 1.0.

2. The hard alloy of claim 1 wherein at least 85 atomic % of the total of Ti, W, Mo, V, Nb and Ta is present in the form of carbide, nitride and/or carbonitride.

3. The hard alloy of claim 1 wherein Nb is present substantially in the form of niobium carbide, and Ta is present substantially in the form of tantalum nitride.

4. The hard alloy of claim 1 wherein based on the weight of the hard alloy, Ti is 28 to 40 %, W 6 to 25 %, Mo 3 to 12 %, V 0.2 to 2.0 %, Nb 3 to 17 %, Ta 3 to 17 %, Ni 7.0 to 30 % and Co 8.0 to 35 %, respectively.

5. The hard alloy of claim 1 wherein the content of (Nb + Ta) is 7 to 20 %.

6. The hard alloy of claim 1 wherein the Ta/Nb weight ratio is 1.0 to 2.5.

7. The hard alloy of claim 1 wherein the content of (Ni + Co) is 20 to 35 %.

8. The hard alloy of claim 1 wherein the Ni/Co weight ratio is 0.6 to 1.5.

9. The hard alloy of claim 1 wherein the N atom/(C atom + N atom) weight ratio is 0.33 to 0.50.

10. The hard alloy of claim 1 wherein the atomic ratio of (total amount of C atom and N atom)/(total amount of metallic atoms except Ni and Co) is within the range of 0.82 to 0.98.

11. A cutter made of the hard alloy of claim 1.

12. A cutting tool made of the hard alloy of claim 1.

13. The cutting tool of claim 12 wherein an edge angle is 40 to 170°.

14. The cutting tool of claim 12 which is a drill or an end mill.

15. A process for producing the hard alloy of claim 1, which comprises burning a starting powder mixture containing elements, Ti, W, Mo, V, Nb, Ta, Ni, Co, C and N as essential ingredients in proportions described in claim 1 wherein the metallic ingredients, Ti, W, V, Nb and Ta are present substantially in the form of carbide, nitride and/or carbonitride, at least part of Mo is present as a simple metal, the remainder thereof is present in the form of carbide, nitride and/or carbonitride, and Ni and Co are present substantially as simple metals.

16. The process of claim 15 wherein the starting powder mixture contains Nb substantially in the form of carbide and Ta substantially in the form of nitride.

# FIG. 1

A

H

# FIG. 3

45°

# FIG. 2

P

S

# FIG. 4

θ

# INTERNATIONAL SEARCH REPORT

International Application No PCT/JP90/00966

**I. CLASSIFICATION OF SUBJECT MATTER (if several classification symbols apply, indicate all)** [6]

According to International Patent Classification (IPC) or to both National Classification and IPC

Int. Cl[5]    C22C1/05, 29/02, 29/04, 29/16, B23B27/14, B23D61/00, B26B3/00, 13/00, 19/00, 21/00, 23/00, 27/00

**II. FIELDS SEARCHED**

Minimum Documentation Searched [7]

| Classification System | Classification Symbols |
|---|---|
| IPC | C22C1/05, 29/02, 29/04, 29/16, B23B27/14, B23D61/00, B26B3/00, 13/00, 19/00, 21/00, 23/00, 27/00 |

Documentation Searched other than Minimum Documentation
to the Extent that such Documents are Included in the Fields Searched [8]

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| X | JP, A, 64-31949 (Toshiba Tungaloy Co., Ltd.), 2 February 1989 (02. 02. 89), Pages 2, 3 (Family: none) | 1 - 16 |
| X | JP, A, 64-31948 (Toshiba Tungaloy Co., Ltd.), 2 February 1989 (02. 02. 89), Pages 2, 3 (Family: none) | 1 - 16 |
| X | JP, A, 63-262443 (Mitsubishi Metal Corp.), 28 October 1988 (28. 10. 88), Pages 2, 3 (Family: none) | 1 - 16 |
| X | JP, A, 63-96242 (Toshiba Tungaloy Co., Ltd.), 27 April 1988 (27. 04. 88), Pages 2 to 5 (Family: none) | 1 - 16 |
| X | JP, A, 62-170451 (Sumitomo Electric Industries, Ltd.), 27 July 1987 (27. 07. 87), Pages 1 to 3 (Family: none) | 1 - 16 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| October 19, 1990 (19. 10. 90) | November 5, 1990 (05. 11. 90) |
| International Searching Authority | Signature of Authorized Officer |
| Japanese Patent Office | |

Form PCT/ISA/210 (second sheet) (January 1985)